# FASCICULE DE BREVET EUROPEEN

(11) **EP 1 557 645 B1**
(45) Date de publication et mention de la délivrance du brevet: **04.02.2009**
(21) Numéro de dépôt: 05001087.5
(22) Date de dépôt: 20.01.2005
(51) Int. Cl.: G01D 5/25, G01D 5/252, H01H 19/58

(54) **Encodeur relatif rotatif et tableau de commande de véhicule automobile muni d'un tel encodeur**
Relative Drehkodiereinrichtung und Armaturenbrett ausgestattet mit einer solchen Einrichtung
Relative rotation encoder and vehicle control panel comprising such encoder

(30) Priorité: 21.01.2004 FR 0400567
(43) Date de publication de la demande: 27.07.2005
(73) Titulaire: Valeo Systèmes Thermiques, 78321 Le Mesnil St Denis Cedex (FR)
(72) Inventeur: Huynh, Tan Duc, 93330 Neuilly sur Marne (FR); Beraud, Henry, 94300 Vincennes (FR)
(74) Mandataire: Croonenbroek, Thomas Jakob

(56) Documents cités:
- WO-A-96/19872
- DE-A- 3 136 045
- US-A- 3 398 245
- US-A- 4 345 240

## Description

L'invention se rapporte à un encodeur relatif rotatif de type mécanique, et à un tableau de commande pour véhicule automobile muni d'un tel encodeur.

Il existe différents type d'encodeurs rotatifs qui sont divisés en général en deux grandes catégories : les encodeurs relatifs, qui donnent le nombre d'incréments parcourus par l'encodeur lorsqu'il tourne, et les encodeurs absolus (comme décrit, par exemple, dans le document US 3,398,245 A), qui permettent de déterminer à tout instant, même après une coupure d'alimentation, la position angulaire exacte de l'encodeur.

Dans chaque catégorie, il peut notamment être fait appel à une technique optique, avec faisceau incident et réfléchi vers un capteur optique par une piste réfléchissante munie par exemple d'une succession de « crans » radiaux disposés sur une ou plusieurs couronnes concentriques. Il existe également une technique mécanique, avec une ou plusieurs pistes électriquement conductrices et des contacteurs métalliques frottant sur lesdites pistes.

Un inconvénient des encodeurs relatifs est qu'ils présentent plusieurs pistes concentriques pour permettre de déterminer le sens de rotation et l'incrémentation du nombre de pas parcourus par l'encodeur. Cela engendre un encombrement important, plus précisément au niveau du diamètre de l'encodeur, des bruits de frottements plus fréquents à cause du nombre de pistes et de contacteurs, un déséquilibre de la partie mobile de l'encodeur autour de son axe de rotation car cette partie mobile ne présente qu'un seul contacteur par piste, et des faux contacts plus nombreux engendrant des erreur de mesure.

Dans le domaine particulier de l'industrie automobile, un besoin de plus en plus important existe concernant l'utilisation de tels encodeurs relatifs. Ils sont utilisés le plus souvent sur un tableau de commande, par exemple sur la console centrale de pilotage d'un appareil de ventilation, de chauffage et/ou de climatisation. Ils permettent par exemple de régler des paramètres de l'air traité et distribué dans l'habitacle comme sa température, le débit du flux d'air ou la distribution du flux dans l'habitacle.

Les problèmes concernant les encodeurs relatifs mécaniques se retrouvent donc dans le domaine particulier des tableaux de commande pour appareil de ventilation, de chauffage et/ou de climatisation de véhicule automobile où une grande précision de mesure, une fiabilité dans le temps, une facilité d'utilisation et un montage/démontage aisé sont requis.

Pour résoudre ces problèmes, l'invention propose de réaliser un encodeur relatif rotatif de type mécanique dont l'encombrement est inférieur aux encodeurs relatifs de l'art antérieur.

Plus précisément, l'invention a pour objet un encodeur relatif rotatif comportant une partie fixe et une partie mobile et au moins un contacteur positionné en regard d'une piste électriquement conductrice, le contacteur appartenant à la partie mobile et la piste conductrice appartenant à la partie fixe ou inversement, ledit encodeur comprenant au moins un contacteur et au moins deux sous-pistes comportant chacune au moins deux segments, les segments d'une même sous-piste étant séparés les uns des autres par un segment d'une autre sous-piste, de sorte que la piste conductrice présente une alternance de segments de sous-pistes disposés sur une même circonférence.

Selon des modes préférés de réalisation de la présente invention :
- chaque contacteur présente une protubérance ayant une forme sensiblement bombée ;
- chaque contacteur comporte une lame flexible munie à son extrémité libre de ladite protubérance bombée ;
- la lame flexible de chaque contacteur s'étend au moins axialement par rapport à une couronne centrale de support, ou bien essentiellement radialement, dans le plan de ladite couronne, pour former un frotteur ;
- les contacteurs sont répartis de manière régulière,
- l'encodeur comporte trois contacteurs répartis sur une première circonférence commune et disposés sensiblement à 120° les uns des autres ;
- l'ordre des segments des sous-pistes sur une circonférence complète, et dans le sens des aiguilles d'une montre, est le suivant : premier segment d'une première sous-piste, premier segment d'une sous-piste commune, second segment de la première sous-piste, deuxième segment de la sous piste commune, premier segment d'une deuxième sous-piste, troisième segment de la sous-piste commune, second segment de la deuxième sous-piste et quatrième segment de la sous-piste commune ;
- lorsque tous les contacteurs sont en contact électrique avec la sous-piste commune, un signal binaire de sortie « 00 » est émis ;
- lorsqu'un contacteur est en contact électrique avec la deuxième sous-piste et que les autres contacteurs sont en contact avec la sous-piste commune, un signal binaire de sortie « 01 » est émis ;
- lorsqu'un contacteur est en contact électrique avec la première sous-piste et que les autres contacteurs sont en contact avec la sous-piste commune, un signal binaire de sortie « 10 » est émis ; et,
- lorsque deux contacteurs sont en contact avec les première et seconde sous-pistes et que le troisième contacteur est en contact avec la sous-piste commune, un signal binaire de sortie « 11 » est émis.

Selon une variante de réalisation de réalisation de la présente invention :
- l'encodeur comporte quatre contacteurs répartis sur une circonférence commune et disposés sensiblement à 90° les uns des autres ;
- une première sous-piste comporte deux segments, une seconde sous-piste comporte deux segments et une sous-piste commune comporte douze segments disposés en alternance avec les segments des première et seconde sous-pistes ;
- l'ordre des segments de sous-pistes, sur une circonférence complète et dans le sens inverse des aiguilles d'une montre, est le suivant : premier et second segments de la première sous-piste, premier à troisième segments de la sous-piste commune, premier et second segments de la deuxième sous-piste, quatrième à douzième segments de la sous-piste commune ;
- lorsque tous les contacteurs sont en contact électrique avec la sous-piste commune, un signal binaire de sortie « 00 » est émis ;
- lorsqu'un contacteur est en contact électrique avec la première sous-piste et que les autres contacteurs sont en contact avec la sous-piste commune, un signal binaire de sortie « 10 » est émis ;
- lorsque deux contacteurs sont en contact avec les première et seconde sous-pistes et que les deux autres contacteurs sont en contact avec la sous-piste commune, un signal binaire de sortie « 11 » est émis ; et
- lorsqu'un contacteur est en contact électrique avec la deuxième sous-piste et que les autres contacteurs sont en contact avec la sous-piste commune, un signal binaire de sortie « 01 » est émis.

Selon d'autres modes de réalisation de la présente invention :
- les secteurs angulaires décris par les segments des première et/ou deuxième sous-pistes sont identiques ;
- les secteurs angulaires décrits par les segments de toutes les sous pistes sous-pistes sont identiques ;
- les segments appartenant respectivement à une sous-piste sont reliés entre eux par au moins un filament commun, lesdits filaments étant disposés sur au moins une deuxième circonférence ;
- un orifice est aménagé au centre de la piste ;
- la partie mobile de l'encodeur comprend un bouton central de commande sous lequel se trouve un élément électriquement conducteur coopérant, par appui sensiblement axial sur le dit bouton, avec un contacteur électrique de la partie fixe, notamment pour valider une position prise par l'encodeur rotatif.

L'invention a également pour objet un tableau de commande, par exemple pour appareil de chauffage, de ventilation et/ou de climatisation de véhicule automobile, muni d'un encodeur rotatif absolu de type mécanique tel que défini précédemment.

D'autres caractéristiques, détails et avantages de l'invention ressortiront à la lecture de la description qui suit, faite en référence aux dessins annexés donnés à titre d'exemple et qui représentent respectivement :
- la figure 1, une vue en perspective éclatée d'un encodeur relatif rotatif conforme à la présente invention,
- la figure 2, une vue de détail en perspective éclatée des parties fixe et mobile de l'encodeur qui sont en contact,
- la figure 3, une vue en coupe de l'encodeur,
- la figure 4, une vue de face d'une piste appartenant à la partie fixe de l'encodeur,
- les figures 5 à 8, des vues de face illustrant chacune une position prise par les parties fixe et mobile l'une par rapport à l'autre,
- la figure 9, une vie en perspective éclatée d'une variante de réalisation de la figure 2 illustrant un second mode de réalisation de l'invention, et
- les figures 10 à 13, des vues de face illustrant chacune une position différente prise par les parties fixe et mobile d'un troisième mode de réalisation de l'encodeur relatif comportant quatre contacteurs.

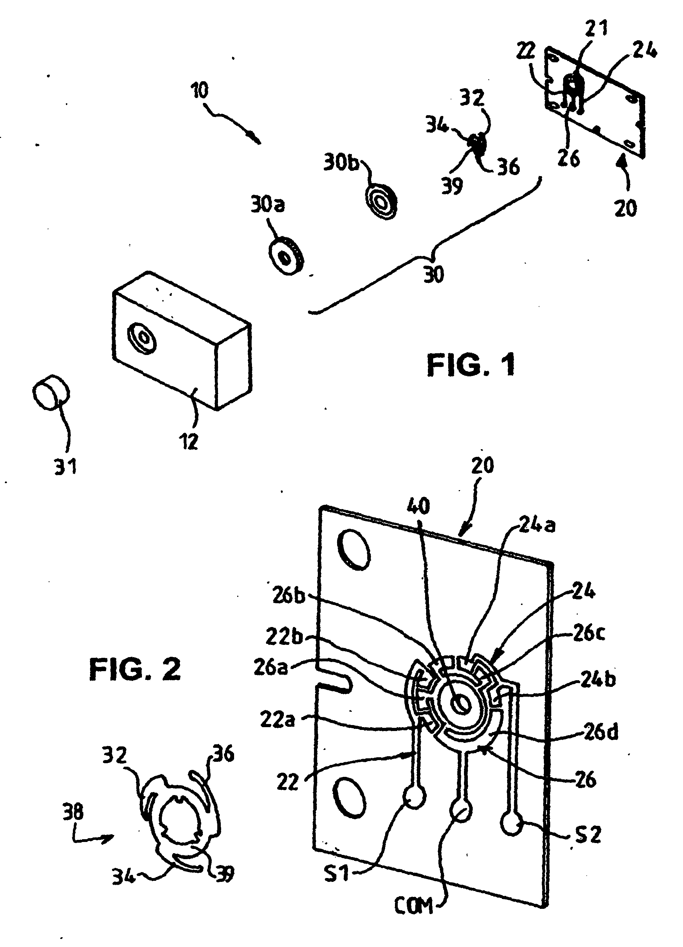

La figure 1 illustre, à l'aide d'une vue en perspective éclatée, un encodeur relatif rotatif de type mécanique 10 conforme à la présente invention. Cet encodeur relatif 10 comporte principalement une partie fixe 20, matérialisée ici par une carte à circuit imprimé, et une partie mobile 30 mise en rotation par l'intermédiaire d'un organe de commande 31, tel qu'un bouton, accessible sur un tableau de commande, notamment d'un appareil de ventilation, de chauffage et/ou de climatisation de véhicule automobile.

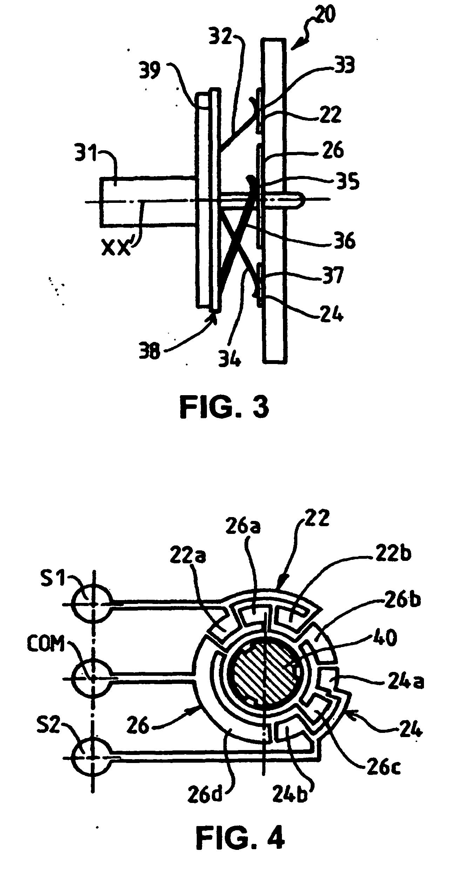

La partie fixe 20 comprend une piste plane électriquement conductrice 21 par exemple réalisé en métal tel que le cuivre. La piste 21 est représentée plus en détail sur les figures 2 et 4. Cette piste 21 est en réalité constituée de trois sous-pistes 22, 24 et 26 qui sont intercalées alternativement les unes entre les autres de sorte que ces trois sous-pistes sont disposées sur une même circonférence. En d'autres termes, et comme cela est décrit ci-après plus en détail, contrairement à l'art antérieur où les différentes pistes sont concentriques et occupent donc un espace radial important, les sous-pistes formant la piste 21 conformément à la présente invention sont de la même largeur radiale et sont disposées sensiblement sur un même diamètre.

En effet, chaque sous-piste comporte plusieurs segments conducteurs reliés entre eux par un filament conducteur formant une borne de connexion. Ainsi la première sous-piste 22 comporte deux segments 22a et 22b de dimensions similaires, c'est-à-dire dire décrivant un secteur angulaire égal et présentant une largeur radiale identique. Ces segments 22a et 22b sont reliés entre eux par un premier filament S1 extérieur au diamètre des segments 22a et 22b et formant une borne conductrice de connexion. La deuxième sous-piste 24 comporte deux segments 24a et 24b, également de dimensions similaires, reliés entre eux par un deuxième filament S2 extérieur au diamètre commun des segments 24a et 24b et formant une deuxième borne conductrice de connexion. Enfin, la troisième sous-piste 26, appelée également sous-piste commune, comprend quatre segments 26a, 26b, 26c et 26d de différentes dimensions circonférentielle reliés entre eux par un troisième filament référencé COM extérieur au diamètre des segments 26a à 26d, et formant une borne conductrice de connexion. Un orifice 40 est réalisé au centre de la piste conductrice 21 pour alléger la structure ou laisser la place à un dispositif de mise en rotation de la partie mobile tel qu'un arbre rotatif.

Selon l'exemple de réalisation, le positionnement des segments des différentes sous-pistes, sur un tour complet et dans le sens des aiguilles d'une montre, est le suivant : premier segment 22a de la première sous-piste 22, premier segment 26a de la sous-piste commune 26, second segment 22b de la première sous-piste 22, deuxième segment 26b de la sous piste commune 26, premier segment 24a de la deuxième sous-piste 24, troisième segment 26c de la sous-piste commune 26, second segment 24b de la deuxième sous-piste et quatrième segment 26c de la sous-piste commune 26. Ainsi, cette alternance des segments de sous-pistes sur une même circonférence permet d'avoir une piste « multi-segments » n'occupant pas plus que la dimension radiale d'une seule piste.

La partie mobile 30 est pilotée par l'organe de commande 31 manipulable par un utilisateur tel que le conducteur ou le passager avant d'un véhicule, et comprend notamment deux bagues 30a et 30b et trois contacteurs 32, 34 et 36 réalisés en métal électriquement conducteur tel que du cuivre. Les contacteurs 32, 34 et 36 sont formés chacun une lame flexible à l'extrémité libre desquelles se trouvent des protubérances bombées 33, 35 et 37 faisant office de contact. Les trois contacteurs 32, 34 et 36 sont solidaires d'une couronne 39 pour former un frotteur, et sont disposées de telle sorte que lesdites protubérances bombées sont placées à 120° les unes des autres sur une circonférence commune, selon l'exemple de réalisation.

Une fois la partie mobile 30 montée sur la partie fixe 20, les protubérances 33, 35, et 37 se trouvent en face et au contact de la piste conductrice 21.

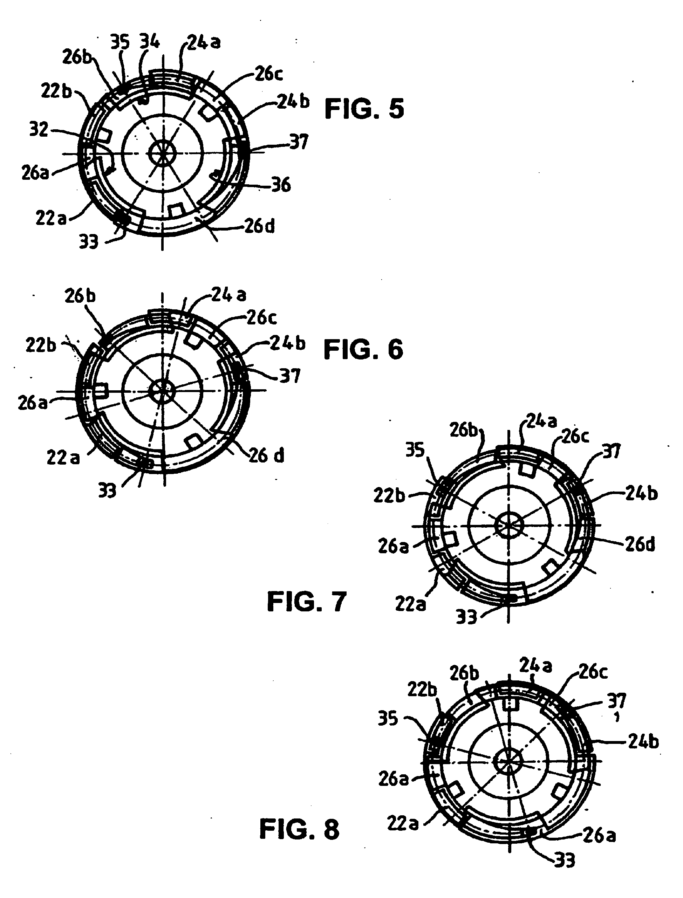

Le mode de fonctionnement d'un tel encodeur rotatif absolu de type mécanique est le suivant :
- lorsque les protubérances bombées 33, 35 et 37 des contacteurs 32, 34 et 36 sont en contact électrique avec la sous-piste commune 26 (voir figure 5), un signal binaire de sortie « 00 » est émis par l'encodeur,
- lorsque la protubérance bombée d'un contacteur par exemple la protubérance 37 du contacteur 36, est en contact électrique avec la deuxième sous-piste 24, par exemple avec le segment 24b, et que les protubérances bombées 33 et 35 des contacteurs 32 et 34 sont en contact avec la sous-piste commune 26 (voir figure 6), un signal binaire de sortie « 01 » est émis par l'encodeur,
- lorsque deux protubérances bombées de deux contacteurs, par exemple les protubérances 35 et 37 des contacteurs 34 et 36, sont en contact avec les première et seconde sous-pistes 22 et 24, par exemple avec les segments 22b et 24b, et que la protubérance 33 du contacteur 32 est en contact avec la sous-piste commune 26 (voir figure 7), un signal binaire de sortie « 11 » est émis par l'encodeur,
- lorsque la protubérance bombée d'un contacteur, par exemple la protubérance 35 du contacteur 34, est en contact électrique avec la première sous-piste 22, par exemple avec le segment 22b, et que les protubérances bombées 33 et 37 des contacteurs 32 et 36 sont en contact avec la sous-piste commune 26 (voir figure 8), un signal binaire de sortie « 10 » est émis par l'encodeur.

Suivant le sens des signaux binaires émis, et donc l'ordre des segments de sous-pistes mis en contact avec les contacteurs, il est possible de déterminer le sens de rotation de l'encodeur.

Par conséquent, si un signal binaire « 01 » est émis après un signal binaire « 00 », cela signifie en particulier, comme illustré par les figures 5 et 6, que la protubérance bombée 37 s'est déplacée du segment 26d au segment 24b, c'est-à-dire que la partie mobile 30 de l'encodeur 10 a tourné dans le sens inverse des aiguilles d'une montre.

En poursuivant la rotation de la partie mobile 30 de l'encodeur 10 dans le sens contraire des aiguilles d'une montre, la protubérance 37 reste au contact du segment 24b (figure 7) et la protubérance 35 passe du segment 26b au segment 22b. Un signal binaire de sortie « 11 » est alors émis.

Enfin, en poursuivant la rotation de la partie mobile 30 de l'encodeur 10 toujours dans le sens inverse des aiguilles d'une montre, la protubérance 35 reste au contact du segment 22b tandis que la protubérance 37 quitte le segment 24b pour aller sur le segment 26c et un signal binaire de sortie « 10 » est émis, comme illustré par la figure 8.

Bien entendu le même raisonnement peut être réalisé avec les autres segments de sous-pistes et les autres protubérances bombées quand la partie mobile 30 de l'encodeur tourne dans le sens des aiguilles d'une montre.

Ainsi, grâce à cet encodeur multi-segments dont les sous-pistes sont disposées sur une même circonférence et dont les contacteurs sont disposés à 120° les uns des autres, un équilibre des forces de friction autour de l'axe de rotation de l'encodeur entre la partie mobile et la partie fixe est créée de sorte que les faux contacts entre la piste conductrice et les contacteurs sont notablement réduits.

Cela permet également un fonctionnement sans à-coups, c'est-à-dire un toucher doux, car il n'est pas nécessaire de forcer pour passer d'un segment à un autre grâce à la symétrie des lames et le faible rayon de frottement.

Le gain de place permet aussi d'utiliser le centre de l'encodeur par exemple pour y placer un bouton de commande supplémentaire ou des pictogrammes.

Cet encodeur est peu onéreux car il ne présente pas de soudure ou d'assemblage contraignant et chers et utilise des pièces primaires indépendantes faciles à réaliser.

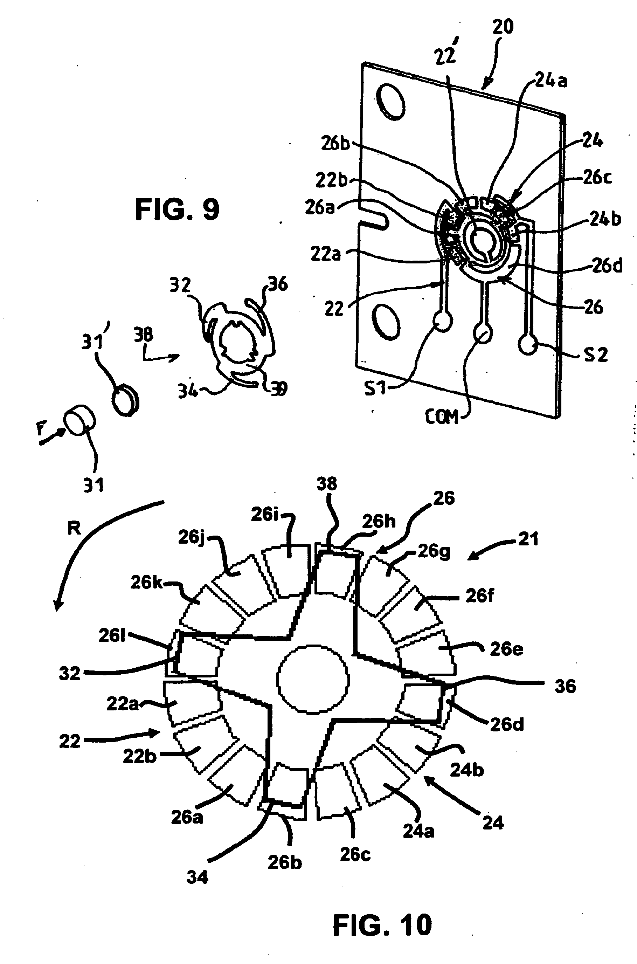

Selon une variante de réalisation illustrée par la figure 9, un élément électriquement conducteur 31', telle qu'une pastille en cuivre, est disposé sous le bouton central 31 de commande de la partie mobile 30. Cet élément électriquement conducteur 31' est adapté pour coopérer, par appui sensiblement axial sur ledit bouton 31 selon la flèche F, avec un contacteur électrique 22' de la piste conductrice 21, se présentant par exemple sous la forme d'une portion en cuivre reliée à la piste 21.

Le dispositif réalise alors à la fois la fonction d'encodeur rotatif et de validation d'une donnée transmise, la validation ayant lieu par appui sur le bouton 31 d'une position précise de l'encodeur correspondant, dans l'exemple à un réglage de l'appareil de climatisation auquel il appartient. Ceci permet de réduire encore l'encombrement de l'encodeur sur le tableau de commande, et améliore son ergonomie pour l'utilisateur.

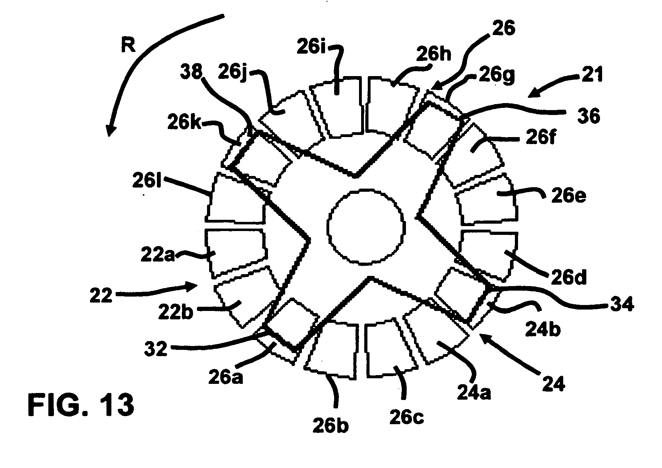

Selon un troisième mode de réalisation illustré par les figures 10 à 13, l'encodeur rotatif relatif 10 de la présente invention comporte une piste 21 en cuivre et quatre contacteurs électriques 32, 34, 36 et 38. La piste 21 comporte une première sous-piste 22 pourvue de deux segments identiques 22a et 22b, une seconde sous-piste 24 pourvue de deux segments identiques 24a et 24b, et une sous-piste commune 26 pourvue de douze segments identiques 26a à 26l.

Selon ce mode de réalisation, le positionnement des segments des différentes sous-pistes, sur un tour complet et dans le sens inverse des aiguilles d'une montre, est le suivant : premier et second segments 22a et 22b de la première sous-piste 22, premier à troisième segments 26a, 26b et 26c de la sous-piste commune 26, premier et second segments 24a et 24b de la deuxième sous-piste 24 et enfin, quatrième à douzième segments 26d, 26e, 26f, 26g, 26h, 26i, 26j, 26k et 26l de la sous-piste commune 26.

Ainsi, cette alternance des segments de sous-pistes sur une même circonférence permet d'avoir une piste « multi-segments » n'occupant pas plus que la dimension radiale d'une seule piste

Les contacteurs 32, 34, 36 et 38 sont similaires à ceux du premier mode de réalisation en ce qu'ils sont constitués d'une lame flexible en cuivre munie, à leur extrémité libre, d'une protubérance de contact glissant.

Le fonctionnement de l'encodeur rotatif relatif conformément à ce mode de réalisation de l'invention est le suivant.

Dans la position initiale illustrée par la figure 10, tous les contacteurs 32, 34, 36 et 38 sont en contact électrique avec la sous-piste commune 26. Dans le cas présent, le contacteur 32 est en contact avec le segment 26l, le contacteur 34 est en contact avec le segment 26b, le contacteur 36 est en contact avec le segment 26d et le contacteur 38 est en contact avec le segment 26h. Dans cette position, un signal binaire de sortie « 00 » est émis.

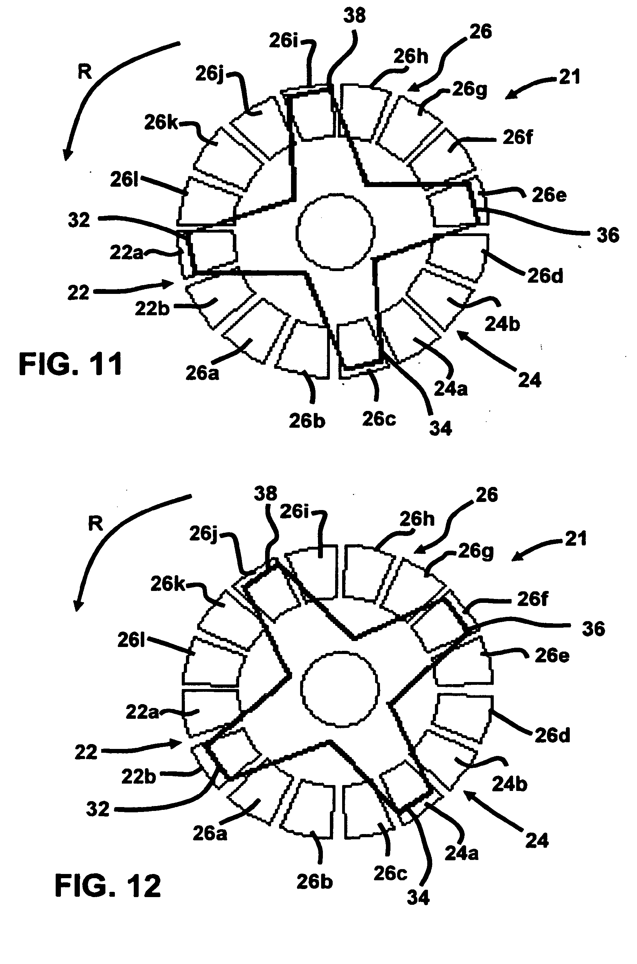

Dans la position illustré par la figure 11, l'encodeur à effectué une rotation par rapport à la position initiale d'un seizième de tour dans le sens inverse des aiguilles d'une montre suivant la flèche R. Le contacteur 32 est en contact électrique avec la première sous-piste 22 par l'intermédiaire du segment 22a, et les autres contacteurs 34, 36 et 38 sont en contact avec la sous-piste commune 26, respectivement par l'intermédiaire des segments 26c, 26e et 26i. Un signal binaire de sortie « 10 » est émis.

Dans la position illustré à la figure 11, l'encodeur à effectué une rotation par rapport à la position précédente d'un seizième de tour dans le sens inverse des aiguilles d'une montre suivant la flèche R. Les deux contacteurs 32 et 34 sont en contact avec les première et seconde sous-pistes 22 et 24, respectivement par l'intermédiaire des segments 22b et 24a, et les deux autres contacteurs 36 et 38 sont en contact avec la sous-piste commune 26, respectivement par l'intermédiaire des segments 26f et 26j. Un signal binaire de sortie « 11 » est émis.

Dans la position illustré à la figure 11, l'encodeur à effectué une rotation par rapport à la position précédente d'un seizième de tour dans le sens inverse des aiguilles d'une montre suivant la flèche R. Le contacteur 34 est en contact électrique avec la deuxième sous-piste 24 par l'intermédiaire du segment 24b, et les autres contacteurs 32, 36 et 38 sont en contact avec la sous-piste commune 26, respectivement par l'intermédiaire des segments 26a, 26g et 26k. Un signal binaire de sortie « 01 » est émis.

Bien entendu, étant donné que les contacteurs 32, 34, 36 et 38 sont disposés à 90° les uns des autres sur une même circonférence, ces quatre valeurs binaires sont obtenues sur un quart de tour (ou quatre seizième) et sont de nouveau émises par l'encodeur rotatif 10 selon la exactement même séquence si la rotation dudit encodeur est poursuivie dans le même sens, les contacteurs effectuant simplement une permutation circulaire par rapport aux segments fixes.

Il doit être bien entendu toutefois que la description détaillée, donnée uniquement à titre d'illustration de l'objet de l'Invention, ne constitue en aucune manière une limitation, les équivalents techniques étant également compris dans le champ de la présente invention.

Ainsi, le nombre n de sous-pistes et de contacteurs peut être supérieur à trois en fonction du paramètre à régler de l'appareil de ventilation, de chauffage et/ou de climatisation. Il en résulte 2 ⁽ⁿ⁻¹⁾ valeurs binaires possibles pour régler ce paramètre, en raison de la présence d'une piste commune faisant office de « référence ». En effet, dans le mode de réalisation illustré, il y a trois sous-pistes, dont une sous-piste commune, et quatre possibilités de valeur binaires : 00, 01, 10 et 11. Il peut ainsi s'agir de quatre positions intermédiaires de commande du flux d'air, c'est-à-dire de distribution de l'air, comme cela est courant dans les appareils de ventilation, de chauffage et/ou de climatisation actuels.

Si quatre sous-pistes étaient prévues, dont une sous-piste commune, il y aurait huit valeurs possibles selon la position des cinq contacteurs par rapport aux sous-pistes 1, 2 et 3 : 000, 001, 010, 011, 100, 101, 110 et 111. Il peut s'agir par exemple de huit positions intermédiaires de localisation de l'air expulsé.

La rotation de l'encodeur est effectuée de préférence sur 360°, ou sur un nombre X tours, le nombre de valeurs possibles pour le réglage d'un paramètre du flux d'air étant égal à X fois le nombre de segments. Ainsi, avec quatre valeurs binaires et trois lames, il est possible d'avoir 12 incréments différents dans un encombrement faible.

Dans l'exemple de réalisation illustré par la figure 3, les lames s'étendent radialement et également axialement par rapport à l'axe de rotation de l'encodeur, et présente ainsi une certaine élasticité axiale permettant de toujours conserver le contact avec la piste. En variante de réalisation, il est possible de réduire le diamètre de la couronne 39 et de placer les lames radialement sensiblement dans le même plan que ladite couronne, afin de réduire l'épaisseur du frotteur.

## Revendications

1. Encodeur rotatif (10) comprenant une partie fixe (20), une partie mobile (30), au moins un contacteur (32 ; 34 ; 36 ; 38) positionné en regard d'une piste électriquement conductrice (21), le contacteur (32 ; 34 ; 36 ; 38) appartenant à la partie mobile (30) et la piste conductrice (21) appartenant à la partie fixe (20) ou inversement, et au moins deux sous-pistes (22 ; 24 ; 26) comportant chacune au moins deux segments (22a, 22b ; 24a, 24b ; 26a - 26l), les segments (22a, 22b ; 24a, 24b ; 26a - 26l) d'une même sous-piste (22 ; 24 ; 26) étant séparés les uns des autres par un segment d'une autre sous-piste, de sorte que la piste conductrice (21) présente une alternance de segments (22a, 22b ; 24a, 24b ; 26a - 26l) de sous-pistes (22, 24, 26) disposés sur une même circonférence, **caractérisé en ce que** l'encodeur rotatif est un encodeur relatif rotatif.

2. Encodeur selon la revendication 1, dans lequel chaque contacteur (32 ; 34 ; 36 ; 38) présente une protubérance (33 ; 35 ; 37) ayant une forme sensiblement bombée.

3. Encodeur selon la revendication 2, dans lequel chaque contacteur (32; 34 ; 36 ; 38) comporte une lame flexible munie à son extrémité libre de ladite protubérance bombée (33 ; 35 ; 37).

4. Encodeur selon la revendication 3, dans lequel chaque lame flexible de chaque contacteur (32 ; 34 ; 36 ; 38) s'étend radialement par rapport à une couronne (39) centrale de support pour former un frotteur.

5. Encodeur selon la revendication 3 ou 4, dans lequel chaque lame flexible de chaque contacteur (32 ; 34 ; 36 ; 38) s'étend axialement par rapport à une couronne centrale (39) de support pour former un frotteur.

6. Encodeur selon l'une quelconque des revendications précédentes, **caractérisé en ce que** les contacteurs (32, 34, 36, 38) sont répartis de manière régulière.

7. Encodeur selon l'une quelconque des revendications précédentes, **caractérisé en ce qu'**il comporte trois contacteurs (32, 34, 36) répartis sur une circonférence commune et disposés sensiblement à 120° les uns des autres.

8. Encodeur selon l'une quelconque des revendications précédentes, dans lequel une première sous-piste comporte (22) deux segments (22a, 22b), une seconde sous-piste (24) comporte deux segments (24a, 24b) et une sous-piste commune (26) comporte quatre segments (26a, 26b, 26c, 26d) disposés en alternance avec les segments (22a, 22b ; 24a, 24b) des première et seconde sous-pistes (22, 24).

9. Encodeur selon la revendication 8, dans lequel l'ordre des segments (22a, 22b ; 24a, 24b ; 26a, 26b, 26c, 26d) de sous-pistes (22, 24, 26), sur une circonférence complète et dans le sens des aiguilles d'une montre, est le suivant: premier segment (22a) d'une première sous-piste (22), premier segment (26a) d'une sous-piste commune (26), second segment (22b) de la première sous-piste(22), deuxième segment (26b) de la sous piste commune (26), premier segment (24a) d'une deuxième sous-piste (24), troisième segment (26c) de la sous-piste commune (26), second segment (24b) de la deuxième sous-piste (24) et quatrième segment (26d) de la sous-piste commune (26).

10. Encodeur selon la revendication 8 ou 9, dans lequel, lorsque tous les contacteurs (32, 34, 36) sont en contact électrique avec la sous-piste commune (26), un signal binaire de sortie « 00 » est émis.

11. Encodeur selon la revendication 8 ou 9, dans lequel, lorsqu'un contacteur (32 ; 34 ; 36) est en contact électrique avec la deuxième sous-piste (24) et que les autres contacteurs (34, 36 ; 32, 36 ; 32, 34) sont en contact avec la sous-piste commune (26), un signal binaire de sortie « 01 » est émis.

12. Encodeur selon la revendication 8 ou 9, dans lequel, lorsqu'un contacteur (32 ; 34 ; 36) est en contact électrique avec la première sous-piste (22) et que les autres contacteurs (34, 36 ; 32, 36 ; 32, 34) sont en contact avec la sous-piste commune (26), un signal binaire de sortie « 10 » est émis.

13. Encodeur selon la revendication 8 ou 9, dans lequel, lorsque deux contacteurs (32, 34 ; 34, 36 ; 32, 36) sont en contact avec les première et seconde sous-pistes (22, 24) et que le troisième contacteur (32 ; 34 ; 36) est en contact avec la sous-piste commune (26), un signal binaire de sortie « 11 » est émis.

14. Encodeur selon l'une quelconque des revendications 1 à 6, **caractérisé en ce qu'**il comporte quatre contacteurs (32, 34, 36, 38) répartis sur une circonférence commune et disposés sensiblement à 90° les uns des autres.

15. Encodeur selon la revendication 14, dans lequel une première sous-piste (22) comporte deux segments (22a, 22b), une seconde sous-piste (24) comporte deux segments (24a, 24b) et une sous-piste commune (26) comporte douze segments (26a - 261) disposés en alternance avec les segments (22a, 22b ; 24a, 24b) des première et seconde sous-pistes (22, 24).

16. Encodeur selon la revendication 15, dans lequel l'ordre des segments (22a, 22b ; 24a, 24b ; 26a - 261) de sous-pistes (22, 24, 26), sur une circonférence complète et dans le sens inverse des aiguilles d'une montre, est le suivant : premier et second segments (22a, 22b) de la première sous-piste (22), premier à troisième segments (26a, 26b, 26c) de la sous-piste commune (26), premier et second segments (24a, 24b) de la deuxième sous-piste (24), quatrième à douzième segments (26d, 26e, 26f, 26g, 26h, 26i, 26j, 26k, 26l) de la sous-piste commune (26).

17. Encodeur selon la revendication 15 ou 16, dans lequel, lorsque tous les contacteurs (32, 34, 36, 38) sont en contact électrique avec la sous-piste commune (26), un signal binaire de sortie « 00 » est émirs.

18. Encodeur selon la revendication 15 ou 16, dans lequel, lorsqu'un contacteur (32 ; 34 ; 36 ; 38) est en contact électrique avec la première sous-piste (22) et que les autres contacteurs (34, 36, 38 ; 32, 36, 38 ; 32, 34, 38 ; 32, 34, 36) sont en contact avec la sous-piste commune (26), un signal binaire de sortie « 10 » est émis.

19. Encodeur selon la revendication 15 ou 16, dans lequel, lorsque deux contacteurs (32, 34 ; 34, 36 ; 36, 38 ; 38, 32) sont en contact avec les première et seconde sous-pistes (22, 24) et que les deux autres contacteurs (36, 38 ; 32, 38 ; 32, 34 ; 34, 36) sont en contact avec la sous-piste commune (26), un signal binaire de sortie « 11 » est émis.

20. Encodeur selon la revendication 15 ou 16, dans lequel, lorsqu'un contacteur (32 ; 34 ; 36 ; 38) est en contact électrique avec la deuxième sous-piste (24) et que les autres contacteurs (34, 36, 38 ; 32, 36, 38 ; 32, 34 ; 38 ; 32, 34, 36) sont en contact avec la sous-piste commune (26), un signal binaire de sortie « 01 » est émis.

21. Encodeur selon l'une quelconque des revendications précédentes, dans lequel les secteurs angulaires décrits par les segments (22a, 22b ; 24a, 24b) des première et/ou deuxième sous-pistes (22, 24) sont identiques.

22. Encodeur selon l'une quelconque des revendications 14 à 21, dans lequel les secteurs angulaires (22a, 22b ; 24a, 24b ; 26a - 26l) décrits par les segments de toutes les sous-pistes (22, 24, 26) sont identiques.

23. Encodeur selon l'une quelconque des revendications précédentes, dans lequel tous les segments (22a, 22b ; 24a, 24b ; 26a - 26l) appartenant respectivement à une sous-piste (22 ; 24 ; 26) sont reliés entre eux par au moins un filament commun (S1 ; S2, COM), lesdits filaments étant disposés sur au moins une deuxième circonférence.

24. Encodeur selon l'une quelconque des revendications précédentes, **caractérisé en ce qu'**un orifice (40) est aménagé au centre de la piste (21).

25. Encodeur selon l'une quelconque des revendications précédentes, **caractérisé en ce que** la partie mobile (30) comprend un bouton central (31) de commande sous lequel se trouve un élément électriquement conducteur (31') coopérant, par appui sensiblement axial sur le dit bouton (31), avec un contacteur électrique (22') de la partie fixe (20), notamment pour valider une position prise par l'encodeur rotatif.

26. Tableau de commande (12), par exemple pour appareil de chauffage, de ventilation et/ou de climatisation de véhicule automobile, muni d'un encodeur relatif (10) selon l'une quelconque des revendications précédentes.

## Claims

1. Rotary encoder (10) comprising a fixed portion (20), a moving portion (30), at least one contactor (32; 34; 36; 38) positioned facing an electrically conducting track (21), the contactor (32; 34; 36; 38) belonging to the moving portion (30) and the conducting track (21) belonging to the fixed portion (20) or conversely, and at least two base tracks (22; 24; 26) each having at least two segments (22a, 22b; 24a, 24b; 26a-26l), the segments (22a, 22b; 24a, 24b; 26a-26l) of the same base track (22; 24; 26) being separated from each other by a segment of another base track, so that the conducting track (21) has alternating segments (22a, 22b; 24a, 24b; 26a-26l) of base tracks (22, 24, 26) disposed on the same circumference, **characterized in that** the rotary encoder is a relative rotary encoder.

2. Encoder according to Claim 1, in which each contactor (32; 34; 36; 38) has a protuberance (33; 35; 37) having a generally rounded shape.

3. Encoder according to Claim 2, in which each contactor (32; 34; 36; 38) has a flexible blade provided at its free end with the said rounded protuberance (33; 35; 37).

4. Encoder according to Claim 3, in which each flexible blade of each contactor (32; 34; 36; 38) extends radially in relation to a central support ring (39) to form a sliding contact.

5. Encoder according to Claim 3 or 4, in which each flexible blade of each contactor (32; 34; 36; 38) extends axially in relation to a central support ring (39) to form a sliding contact.

6. Encoder according to any one of the preceding claims, **characterized in that** the contactors (32, 34, 36, 38) are evenly distributed.

7. Encoder according to any one of the preceding claims, **characterized in that** it has three contactors (32, 34, 36) distributed on a common circumference and generally disposed at 120° from each other.

8. Encoder according to any one of the preceding claims, in which a first base track (22) has two segments (22a, 22b), a second base track (24) has two segments (24a, 24b) and a common base track (26) has four segments (26a, 26b, 26c, 26d) disposed alternately with the segments (22a, 22b; 24a, 24b) of the first and second base tracks (22, 24).

9. Encoder according to Claim 8, in which the order of the segments (22a, 22b; 24a, 24b; 26a, 26b, 26c, 26d) of base tracks (22, 24, 26), on a complete circumference and in the clockwise direction, is as follows: first segment (22a) of a first base track (22), first segment (26a) of a common base track (26), second segment (22b) of the first base track (22), second segment (26b) of the common base track (26), first segment (24a) of a second base track (24), third segment (26c) of the common base track (26), second segment (24b) of the second base track (24) and fourth segment (26d) of the common base track (26).

10. Encoder according to Claim 8 or 9, in which, when all the contactors (32, 34, 36) are in electrical contact with the common base track (26), a binary output signal "00" is emitted.

11. Encoder according to Claim 8 or 9, in which, when a contactor (32; 34; 36) is in electrical contact with the second base track (24) and the other contactors (34, 36; 32, 36; 32, 34) are in contact with the common base track (26), a binary output signal "01" is emitted.

12. Encoder according to Claim 8 or 9, in which, when a contactor (32; 34; 36) is in electrical contact with the first base track (22) and the other contactors (34, 36; 32, 36; 32, 34) are in contact with the common base track (26), a binary output signal "10" is emitted.

13. Encoder according to Claim 8 or 9, in which, when two contactors (32, 34; 34, 36; 32, 36) are in contact with the first and second base tracks (22, 24) and the third contactor (32; 34; 36) is in contact with the common base track (26), a binary output signal "11" is emitted.

14. Encoder according to any one of Claims 1 to 6, **characterized in that** it has four contactors (32, 34, 36, 38) distributed on a common circumference and generally disposed at 90° from each other.

15. Encoder according to Claim 14, in which a first base track (22) has two segments (22a, 22b), a second base track (24) has two segments (24a, 24b) and a common base track (26) has twelve segments (26a-261) disposed alternately with the segments (22a, 22b; 24a, 24b) of the first and second base tracks (22, 24).

16. Encoder according to Claim 15, in which the order of the segments (22a, 22b; 24a, 24b; 26a-261) of the base tracks (22, 24, 26), on a complete circumference and in the anticlockwise direction, is as follows: first and second segments (22a, 22b) of the first base track (22), first to third segments (26a, 26b, 26c) of the common base track (26), first and second segments (24a, 24b) of the second base track (24), fourth to twelfth segments (26d, 26e, 26f, 26g, 26h, 26i, 26j, 26k, 261) of the common base track (26).

17. Encoder according to Claim 15 or 16, in which, when all the contactors (32, 34, 36, 38) are in electrical contact with the common base track (26), a binary output signal "00" is emitted.

18. Encoder according to Claim 15 or 16, in which, when a contactor (32; 34; 36; 38) is in electrical contact with the first base track (22) and the other contactors (34, 36, 38; 32, 36, 38; 32, 34, 38; 32, 34, 36) are in contact with the common base track (26), a binary output signal "10" is emitted.

19. Encoder according to Claim 15 or 16, in which, when two contactors (32, 34; 34, 36; 36, 38; 38, 32) are in contact with the first and second base tracks (22, 24) and the two other contactors (36, 38; 32, 38; 32, 34; 34, 36) are in contact with the common base track (26), a binary output signal "11" is emitted.

20. Encoder according to Claim 15 or 16, in which, when a contactor (32; 34; 36; 38) is in electrical contact with the second base track (24) and the other contactors (34, 36, 38; 32, 36, 38; 32, 34, 38, 32, 34, 36) are in contact with the common base track (26), a binary output signal "01" is emitted.

21. Encoder according to any one of the preceding claims, in which the arcs described by the segments (22a, 22b; 24a, 24b) of the first and/or second base tracks (22, 24) are identical.

22. Encoder according to any one of Claims 14 to 21, in which the arcs (22a, 22b; 24a, 24b; 26a-261) described by the segments of all the base tracks (22, 24, 26) are identical.

23. Encoder according to any one of the preceding claims, in which all the segments (22a, 22b; 24a, 24b; 26a-261) belonging respectively to one base track (22; 24; 26) are connected to each other by at least one common filament (S1; S2; COM), the said filaments being disposed on at least one second circumference.

24. Encoder according to any one of the preceding claims, **characterized in that** a hole (40) is made at the centre of the track (21).

25. Encoder according to any one of the preceding claims, **characterized in that** the moving portion (30) comprises a central control knob (31) underneath which is located an electrically conducting element (31') cooperating, by generally axial pressure on the said knob (31), with an electrical contactor (22') of the fixed portion (20), in particular to check a position taken by the rotary encoder.

26. Control panel (12), for example for a motor vehicle heating, ventilation and/or air conditioning device, provided with a relative encoder (10) according to any one of the preceding claims.

## Patentansprüche

1. Drehencoder (10), der einen festen Teil (20), einen beweglichen Teil (30), mindestens ein Kontaktelement (32; 34; 36; 38), das gegenüber einer elektrisch leitenden Spur (21) positioniert ist, wobei das Kontaktelement (32; 34; 36; 38) zum beweglichen Teil (30) und die leitende Spur (21) zum festen Teil (20) oder umgekehrt gehört, und mindestens zwei Teilspuren (22; 24; 26) enthält, die je mindestens zwei Segmente (22a, 22b; 24a, 24b; 26a - 261) aufweisen, wobei die Segmente (22a, 22b; 24a, 24b; 26a - 261) der gleichen Teilspur (22; 24; 26) durch ein Segment einer anderen Teilspur voneinander getrennt sind, so dass die leitende Spur (21) eine abwechselnde Anordnung von Segmenten (22a, 22b; 24a, 24b; 26a - 261) von Teilspuren (22, 24, 26) aufweist, die auf dem gleichen Umfang angeordnet sind, **dadurch gekennzeichnet, dass** der Drehencoder ein Relativ-Drehencoder ist.

2. Encoder nach Anspruch 1, bei dem jedes Kontaktelement (32; 34; 36; 38) eine Ausbauchung (33; 35; 37) mit im Wesentlichen gewölbter Form aufweist.

3. Encoder nach Anspruch 2, bei dem jedes Kontaktelement (32; 34; 36; 38) eine Blattfeder aufweist, die an ihrem freien Ende mit der gewölbten Ausbauchung (33; 35; 37) versehen ist.

4. Encoder nach Anspruch 3, bei dem jede Blattfeder jedes Kontaktelements (32; 34; 36; 38) sich radial bezüglich eines zentralen Auflagekranzes (39) erstreckt, um einen Schleifkontakt zu bilden.

5. Encoder nach Anspruch 3 oder 4, bei dem jede Blattfeder jedes Kontaktelements (32; 34; 36; 38) sich axial bezüglich eines zentralen Auflagekranzes (39) erstreckt, um einen Schleifkontakt zu bilden.

6. Encoder nach einem der vorhergehenden Ansprüche, **dadurch gekennzeichnet, dass** die Kontaktelemente (32, 34, 36, 38) gleichmäßig verteilt sind.

7. Encoder nach einem der vorhergehenden Ansprüche, **dadurch gekennzeichnet, dass** er drei Kontaktelemente (32, 34, 36) aufweist, die auf einem gemeinsamen Umfang verteilt und im Wesentlichen in einem Abstand von 120° zueinander angeordnet sind.

8. Encoder nach einem der vorhergehenden Ansprüche, bei dem eine erste Teilspur (22) zwei Segmente (22a, 22b) aufweist, eine zweite Teilspur (24) zwei Segmente (24a, 24b) aufweist und eine gemeinsame Teilspur (26) vier Segmente (26a, 26b, 26c, 26d) aufweist, die abwechselnd mit den Segmenten (22a, 22b; 24a, 24b) der ersten und zweiten Teilspuren (22, 24) angeordnet sind.

9. Encoder nach Anspruch 8, bei dem die Reihenfolge der Segmente (22a, 22b; 24a, 24b; 26a, 26b, 26c, 26d) von Teilspuren (22, 24, 26) über einen vollständigen Umfang und in Uhrzeigerrichtung folgendermaßen ist: erstes Segment (22a) einer ersten Teilspur (22), erstes Segment (26a) einer gemeinsamen Teilspur (26), zweites Segment (22b) der ersten Teilspur (22), zweites Segment (26b) der gemeinsamen Teilspur (26), erstes Segment (24a) einer zweiten Teilspur (24), drittes Segment (26c) der gemeinsamen Teilspur (26), zweites Segment (24b) der zweiten Teilspur (24) und viertes Segment (26d) der gemeinsamen Teilspur (26).

10. Encoder nach Anspruch 8 oder 9, bei dem, wenn alle Kontaktelemente (32, 34, 36) mit der gemeinsamen Teilspur (26) in elektrischem Kontakt sind, ein binäres Ausgangssignal "00" gesendet wird.

11. Encoder nach Anspruch 8 oder 9, bei dem, wenn ein Kontaktelement (32; 34; 36) mit der zweiten Teilspur (24) in elektrischem Kontakt ist und die anderen Kontaktelemente (34, 36; 32, 36; 32, 34) mit der gemeinsamen Teilspur (26) in Kontakt sind, ein binäres Ausgangssignal "01" gesendet wird.

12. Encoder nach Anspruch 8 oder 9, bei dem, wenn ein Kontaktelement (32; 34; 36) mit der ersten Teilspur (22) in elektrischem Kontakt ist und die anderen Kontaktelemente (34, 36; 32, 36; 32, 34) mit der gemeinsamen Teilspur (26) in Kontakt sind, ein binäres Ausgangssignal "10" gesendet wird.

13. Encoder nach Anspruch 8 oder 9, bei dem, wenn zwei Kontaktelemente (32, 34; 34, 36; 32, 36) mit den ersten und zweiten Teilspuren (22, 24) in Kontakt sind und das dritte Kontaktelement (32; 34; 36) mit der gemeinsamen Teilspur (26) in Kontakt ist, ein binäres Ausgangssignal "11" gesendet wird.

14. Encoder nach einem der Ansprüche 1 bis 6, **dadurch gekennzeichnet, dass** er vier Kontaktelemente (32, 34, 36, 38) aufweist, die auf einem gemeinsamen Umfang verteilt und in einem Abstand von im Wesentlichen 90° zueinander angeordnet sind.

15. Encoder nach Anspruch 14, bei dem eine erste Teilspur (22) zwei Segmente (22a, 22b) aufweist, eine zweite Teilspur (24) zwei Segmente (24a, 24b) aufweist und eine gemeinsame Teilspur (26) zwölf Segmente (26a - 261) aufweist, die abwechselnd mit den Segmenten (22a, 22b; 24a, 24b) der ersten und zweiten Teilspuren (22, 24) angeordnet sind.

16. Encoder nach Anspruch 15, bei dem die Reihenfolge der Segmente (22a, 22b; 24a, 24b; 26a - 261) von Teilspuren (22, 24, 26) über einen vollständigen Umfang und in Gegenuhrzeigerrichtung folgendermaßen ist: erste und zweite Segmente (22a, 22b) der ersten Teilspur (22), erste bis dritte Segmente (26a, 26b, 26c) der gemeinsamen Teilspur (26), erste und zweite Segmente (24a, 24b) der zweiten Teilspur (24), vierte bis zwölfte Segmente (26d, 26e, 26f, 26g, 26h, 26i, 26j, 26k, 261) der gemeinsamen Teilspur (26).

17. Encoder nach Anspruch 15 oder 16, bei dem, wenn alle Kontaktelemente (32, 34, 36, 38) mit der gemeinsamen Teilspur (26) in elektrischem Kontakt sind, ein binäres Ausgangssignal "00" gesendet wird.

18. Encoder nach Anspruch 15 oder 16, bei dem, wenn ein Kontaktelement (32; 34; 36; 38) mit der ersten Teilspur (22) in elektrischem Kontakt ist und die anderen Kontaktelemente (34, 36, 38; 32, 36, 38; 32, 34, 38; 32, 34, 36) mit der gemeinsamen Teilspur (26) in Kontakt sind, ein binäres Ausgangssignal "10" gesendet wird.

19. Encoder nach Anspruch 15 oder 16, bei dem, wenn zwei Kontaktelemente (32, 34; 34, 36; 36, 38; 38, 32) mit den ersten und zweiten Teilspuren (22, 24) in Kontakt sind und die zwei anderen Kontaktelemente (36, 38; 32, 38; 32, 34; 34, 36) mit der gemeinsamen Teilspur (26) in Kontakt sind, ein binäres Ausgangssignal "11" gesendet wird.

20. Encoder nach Anspruch 15 oder 16, bei dem, wenn ein Kontaktelement (32; 34; 36; 38) mit der zweiten Teilspur (24) in elektrischem Kontakt ist und die anderen Kontaktelemente (34, 36, 38; 32, 36, 38; 32, 34, 38; 32, 34, 36) mit der gemeinsamen Teilspur (26) in Kontakt sind, ein binäres Ausgangssignal "01" gesendet wird.

21. Encoder nach einem der vorhergehenden Ansprüche, bei dem die von den Segmenten (22a, 22b; 24a, 24b) der ersten und/oder zweiten Teilspuren (22, 24) beschriebenen Winkelsektoren gleich sind.

22. Encoder nach einem der Ansprüche 14 bis 21, bei dem die von den Segmenten (22a, 22b; 24a, 24b; 26a - 261) aller Teilspuren (22, 24, 26) beschriebenen Winkelsektoren gleich sind.

23. Encoder nach einem der vorhergehenden Ansprüche, bei dem alle Segmente (22a, 22b; 24a, 24b; 26a - 261), die je zu einer Teilspur (22; 24; 26) gehören, miteinander durch mindestens ein gemeinsames Filament (S1; S2, COM) verbunden sind, wobei die Filamente auf mindestens einem zweiten Umfang angeordnet sind.

24. Encoder nach einem der vorhergehenden Ansprüche, **dadurch gekennzeichnet, dass** eine Öffnung (40) in der Mitte der Spur (21) ausgebildet ist.

25. Encoder nach einem der vorhergehenden Ansprüche, **dadurch gekennzeichnet, dass** der bewegliche Teil (30) einen zentralen Steuerknopf (31) aufweist, unter dem sich ein elektrisch leitendes Element (31') befindet, das durch im Wesentlichen axialen Druck auf den Knopf (31) mit einem elektrischen Kontaktelement (22') des festen Teils (20) zusammenwirkt, insbesondere um eine vom Drehencoder eingenommene Position zu validieren.

26. Schalttafel (12), zum Beispiel für ein Heiz-, Lüftungs- und/oder Klimatisierungsgerät eines Kraftfahrzeugs, die mit einem relativen Encoder (10) nach einem der vorhergehenden Ansprüche versehen ist.
